# EUROPEAN PATENT APPLICATION

(11) **EP 0 863 468 A1**
(43) Date of publication of application: **09.09.1998**
(21) Application number: 98301675.9
(22) Date of filing: 06.03.1998
(51) Int. Cl.: G06F 17/30, G06F 1/00

(54) **Simplified filing system**

(30) Priority: 07.03.1997 JP 52791/97
(71) Applicant: Matsushita Electric Industrial Co., Ltd., Kadoma-shi, Osaka-fu, 571-8501 (JP)
(72) Inventor: Kuwano, Hideyuki, Kadoma-shi, Osaka-fu (JP); Takahashi, Naoki, Katano-shi, Osaka-fu (JP); Yamaguchi, Takehito, Hirakata-shi, Osaka-fu (JP); Okada, Yuji, Hirakata-shi, Osaka-fu (JP); Murata, Kazuyuki, Kyotanabe-shi, Kyoto-fu (JP); Hisatomi, Kenji, Moriguchi-shi, Osaka-fu (JP)
(74) Representative: Barnfather, Karl Jon, Dr.

(57) **Abstract**

The present invention relates to a simplified filing system, constructed in a way to be mutually utilized by connecting a plurality of simplified filing devices to one another through a network. Said operating device 100 comprises an image control means 103 for requesting, in the case where the specified simplified filing device specified at the time of registration of image data is other simplified filing device (filing destination device 200), address solution based on an device ID to said server 10, while said server 10 comprises an address control means 13 for identifying the network address corresponding to said device ID based on the request for address solution from the operating device 100. Therefore, by integrally controlling the network addresses of the respective simplified filing devices with said server 10, it becomes possible to control address information easily because it is only the address information held in said server 10 that needs to be changed even in case of any change in the address information.

## Description

### FIELD OF THE INVENTION

The present invention relates to a simplified filing system, more specifically to a simplified filing system in which a plurality of simplified filing devises can be mutually utilized through a network.

### BACKGROUND OF THE INVENTION

Development of digital technology has made it possible to not only record image data on paper as copy but also store image data as file in magnetic disc, optical disc, magneto-optical disc, etc.

And, an electronic filing system disclosed in the Japanese patent laid-open publication No. 62-219769, for example, is designed to store image data fetched by scanner, etc. as file on a magnetic disc, etc. and take out the file stored this way by utilizing a printer.

A conventional electronic filing system as described above reads image data, stores that image data as image file on a built-in magnetic disc device, etc., assigns image ID to that image file and encodes that image ID into barcode, etc. to make that image ID electronically discriminatable. And, such electronic filing system prepares a registration sheet for the user to identify the contents of that image data by combining said barcode at prescribed position on the first page or a page having some characteristic image of the stored image data, and prints out that registration sheet.

Next, for taking out the stored image data, the system reads the barcode on said registration sheet with a barcode reader, converts the barcode on this registration sheet into image ID and, to makes it possible to take out desired image data easily by identifying said image file based on that image ID.

In the past, said filing function has been incorporated in specialized filing system. In recent years, however, there appeared a digital integraded apparatus which is designed to save space by integrating digital image device such as facsimile, printer, etc. on the basis of a digital copying machine. And then a digital integrated apparatus appeared, which incorporates a filing function for preserving image data.

Moreover, the Japanese patent laid-open publication No. 5-308450 discloses a network type digital copying system capable of controlling image data and attribute information regarding image data such as copying conditions, etc. by means of a centralized storing device (server), inputting instruction for transmission of image data to the server from a display panel provided on a digital copying device (client), and printing the transmitted image data.

However, a conventional digital integrated apparatus is constructed by simply combining the functions of copying machine, facsimile and printer, with little attention to reutilization of the registered image data.

Furthermore, while said network type digital copying system has merits of enabling registration from an arbitrary digital integrated apparatus or take-out of registered image data, it presents a problem of not being very practical because a huge image traffic is produced on the network each time when image data is either registered or taken out, requesting a very high level of capability on the part of the server.

By the way, to perform data transfer, etc. between simplified filing devices connected to one another through a network as described above, it is necessary (for the users) to mutually know the address information on the network to be referred in order to connect.

As control system of such address information, a system is conceivable which consists in furnishing the respective simplified filing devices with address information as database, and changing the database in the respective devices each time when there is any change.

However, such method takes much time and trouble when the number of units increased, because any addition to or change of addresses in said simplified filing devices must be reflected in the address information database of all of said simplified filing devices.

Still more, since said simplified filing device is usually used by multiple users, it is important to guarantee confidentiality of the stored files. Confidentiality is secured since said simplified filing device in which the image files are stored controls read access when the image data is retrieved.

Yet more, it is necessary to control user's image storing right to register image data because of the limitation imposed on the storing capacity of said simplified filing device. This control is made through write access control of the device which stores image files.

Here, first, it is necessary to identify the user who is attempting to have access to the image file forming the subject of access in order to control both read access and write access control as explained above. This user identification requires user authentication information consisting of user ID and password, and such user authentication information is kept in some of the devices connected to the network in the case where access to said image files is obtained in linkage with one another through the network.

Here, an idea is conceivable to make the respective simplified filing devices have said user authentication information, but this method becomes rather troublesome when the number of units increases, because any addition to or change of addresses in said simplified filing devices must be reflected in the address information database of all of said simplified filing devices.

The object of the present invention, proposed in view of said circumstances, is to provide a simplified filing system capable of controlling address information or user authentication information easily even with an increased number of units connected, and enabling linked filing on the respective simplified filing devices connected through a network even with a low server capability.

### SUMMARY OF THE INVENTION

The present invention adopts the following means to achieve said object:

In the first place, the present invention presupposes a simplified filing system realized by connecting, through a network, a plurality of simplified filing devices for storing input image data in an image storing means by attaching image ID identifying the image data.

In said system, a user authentication checking means 113, provided in said simplified filing device (hereinafter referred to as "operating device 100") operated by the user who requests user authentication by notifying the server connected to said network of the user information input by the user. And a user authentication means 114 authenticates the user based on a request for user authentication from said operating device 100.

With said construction, the user information of the users registered in the respective simplified filing devices is controlled by said server 10 and user authentication is made by said server 10 and, for that reason, only the user information held in said server 10 needs to be changed in case of any change in the user information, thus making it possible to change the user information easily even if the number of units of said simplified filing devices increases.

Moreover, in said system, said operating device 100 is provided with an image control means 103 with following functions. Namely, the image control means 103 determines if the simplified filing device specified with the device ID input by the user, at the time of registration of image data, as destination of that image data is own device or not, and in the case where the specified simplified filing device is other simplified filing device (hereinafter referred to as "filing destination device 200"), sends request for address solution based on said device ID to said server 10. According to the request for adderss solution from the operating device 100, the address control means 13 provided on said server 10 specifies the network address corresponding to said device ID. Furthermore, said system is constructed by comprising a communication means for instructing transfer of image data forming the subject of said registration from said operating device 100 to said destination device 200, provided in either said server 10, said operating device 100 or said filing destination device 200.

With said construction, even if the destination of said image data is said filing destination device 200 connected to said network, first, the network address of said simplified filing device is submitted to address solution by said server 10 which integrally controls the network address of said simplified filing device, and said image data is transferred to said filing destination device 200.

Therefore, by integrally controlling the network addresses of the respective simplified filing devices with said server 10 and performing network address solution with said server 10, it becomes possible to control address information easily even if the number of units of said simplified filing devices increases, because it is only the user information held in said server 10 that needs to be changed in case of any change in the user information.

Furthermore, in said system, said image control means 103 determins if the simplified filing device specified with said image ID, at the time of readout of image data, is own device or not. And in the case where the specified simplified filing device is other simplified filing device (hereinafter referred to as "specified device 200") the image control means 103 sends request for address solution based on the device ID contained in said image ID to the server connected to said network. As in the same manner with registration, an address control means 13 provided in the server 10 identifies the network address corresponding to said device ID. In addition, said system is constructed by comprising a communication means for instructing transfer of image data forming the subject of said reading from said specified device 200 to said operating device 100, provided in either said server 10, said operating device 100 or said specified device 200.

With said construction, even if the image data forming the subject of reading is stored in said specified device 200 connected to said network, first, the network address of said simplified filing device is submitted to address solution by said server 10 which integrally controls the network addresses of said simplified filing device, and said image data is transferred from said specified device 200.

Therefore, by integrally controlling the network addresses of the respective simplified filing devices with said server 10 and performing network address solution with said server 10, it becomes possible to control address information easily even if the number of units of said simplified filing devices increases, because it is only the user information held in said server 10 that needs to be changed in case of any change in the user information.

### BRIEF DESCRIPTION OF THE INVENTION

Fig. 1 is a block diagram showing the construction of an embodiment of the present invention.

Fig. 2 is a system construction drawing showing the construction of an embodiment of the simplified filing system according to the present invention.

Fig. 3 is a flow chart showing the working procedure at the time of filing of image data in an embodiment of the present invention.

Fig. 4 is an explanatory drawing showing the first form of transfer at the time of filing of image data in an embodiment of the present invention.

Fig. 5 is an explanatory drawing showing the second form of transfer at the time of filing of image data in an embodiment of the present invention.

Fig. 6 is an explanatory drawing showing the third form of transfer at the time of filing of image data in an embodiment of the present invention.

Fig. 7 is a logical construction drawing of image ID.

Fig. 8 is an example of image furnished with image ID mark printed on a printing sheet.

Fig. 9 is a construction drawing showing the construction of an address control information table.

Fig. 10 is a flow chart showing the working procedure at the time of readout of image data in an embodiment of the present invention.

Fig. 11 is an explanatory drawing showing the first form of transfer at the time of readout of image data in an embodiment of the present invention.

Fig. 12 is an explanatory drawing showing the second form of transfer at the time of readout of image data in an embodiment of the present invention.

Fig. 13 is an explanatory drawing showing the third form of transfer at the time of readout of image data in an embodiment of the present invention.

Fig. 14 is a block diagram showing the construction of other embodiment of the present invention.

Fig. 15 is a flow chart showing the working procedure at the time of filing of image data in other embodiment of the present invention.

Fig. 16 is a logical construction drawing of user information.

Fig. 17 is a construction drawing showing the construction of a user control information table.

Fig. 18 is a flow chart showing the working procedure at the time of readout of image data in other embodiment of the present invention.

Fig. 19 is a block diagram showing the construction of other embodiment of the present invention.

Fig. 20 is an explanatory drawing showing the transfer procedure at the time of filing of image data in other embodiment of the present invention.

Fig. 21 is a construction drawing showing the construction of an attribute control table.

Fig. 22 is an explanatory drawing showing the transfer procedure at the time of filing of image data in other embodiment of the present invention.

Fig. 23 is an explanatory drawing showing the transfer procedure at the time of readout of image data in other embodiment of the present invention.

Fig. 24 is a block diagram showing the construction of other embodiment of the present invention.

### EMBODIMENTS OF THE INVENTION

### (EMBODIMENT 1)

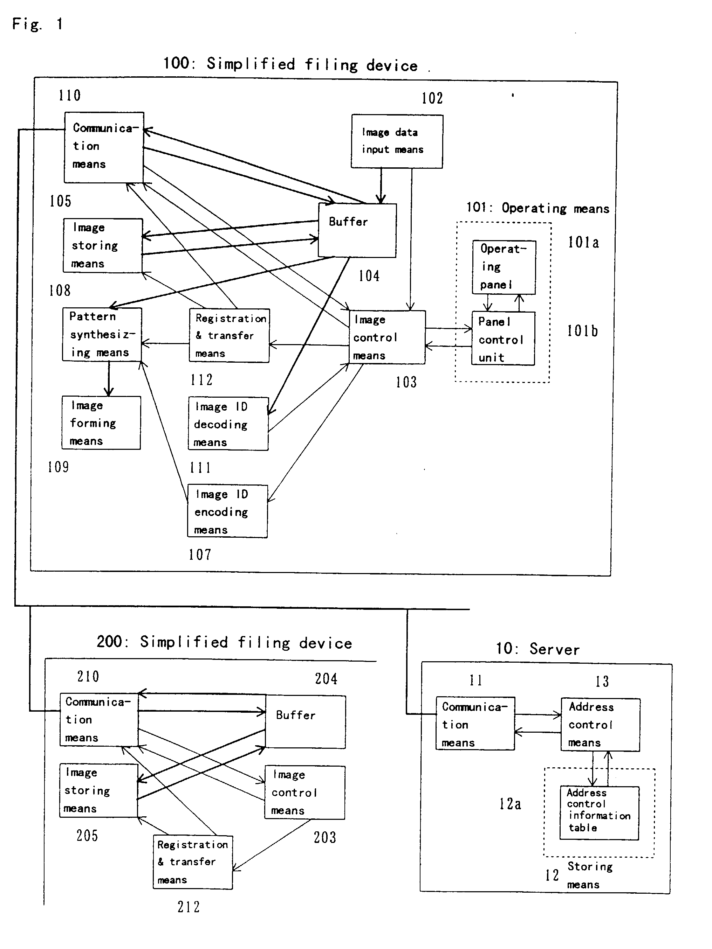

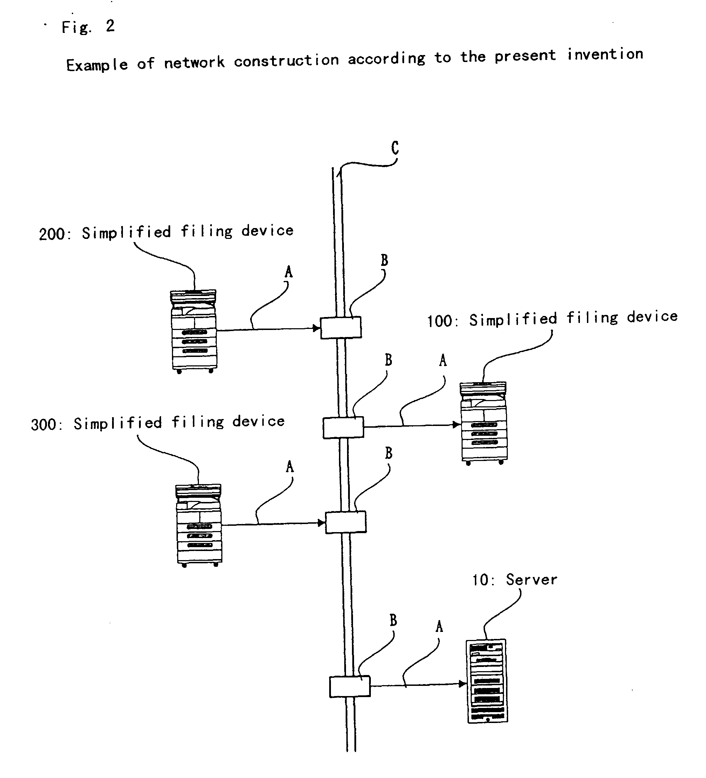

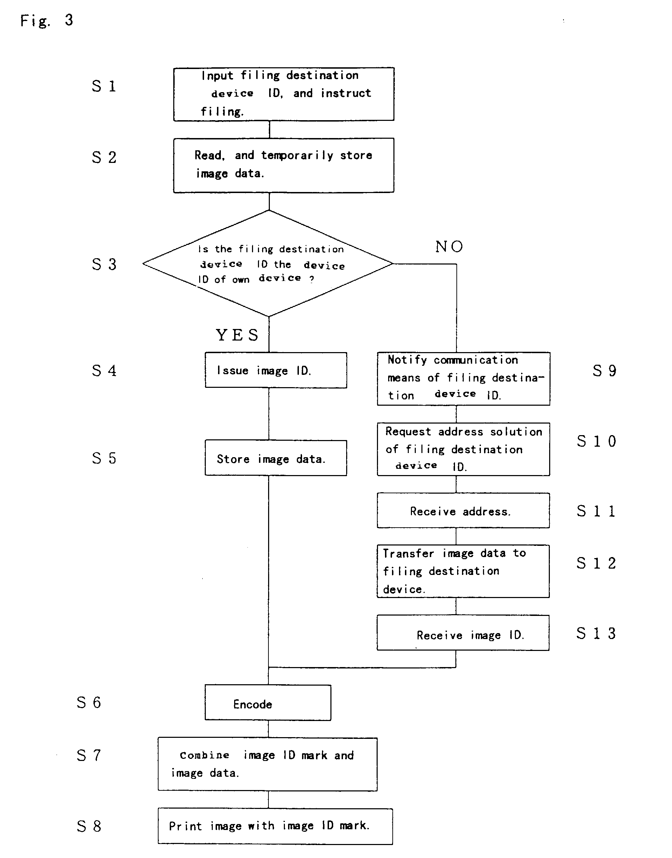

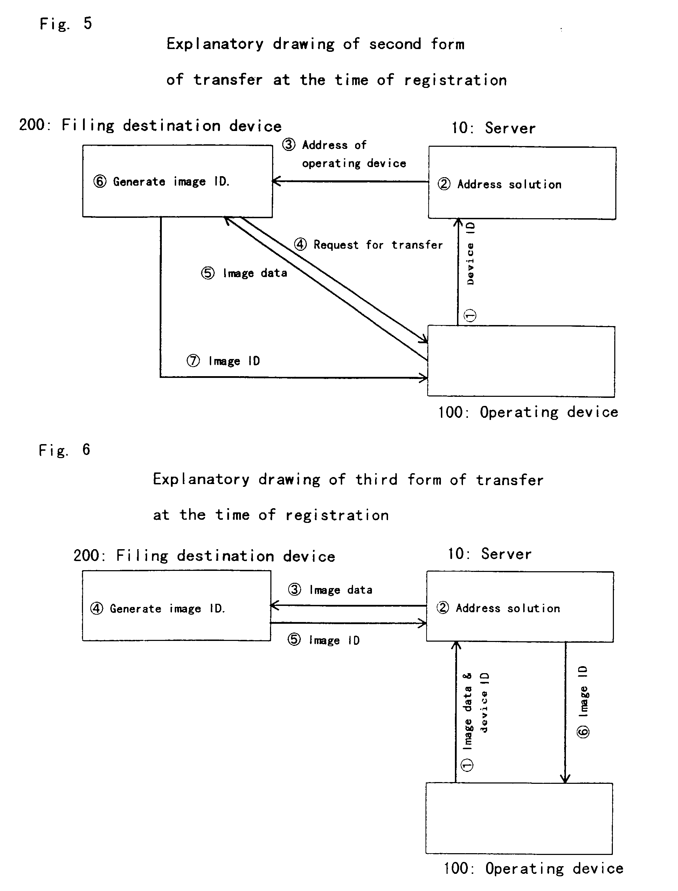

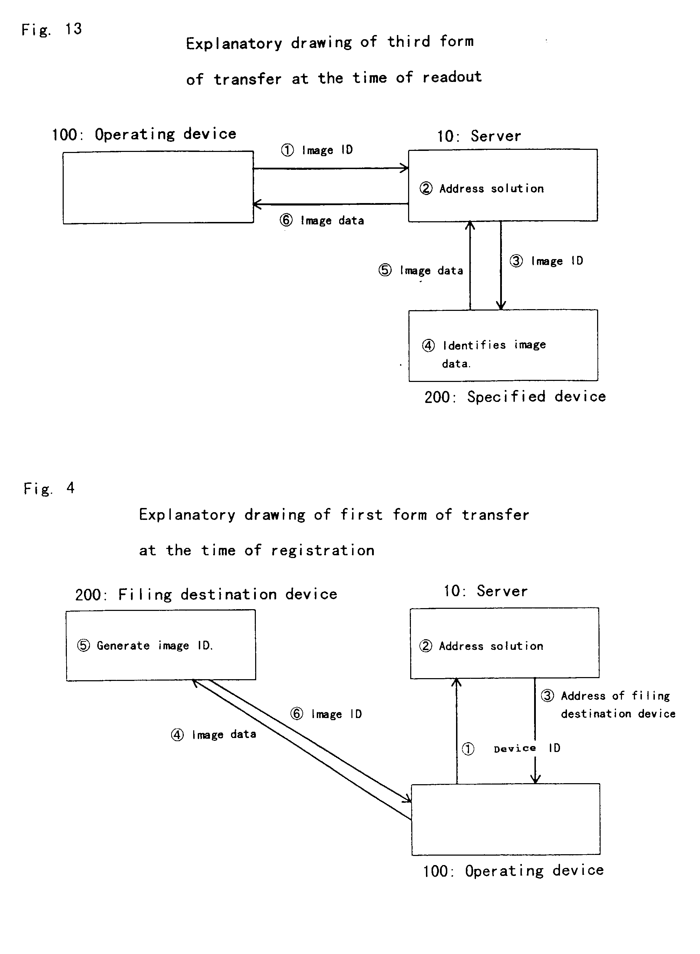

Fig. 1 is a block diagram showing the construction in an embodiment of a simplified filing system according to the present invention, and Fig. 2 is a system construction drawing showing the construction in which the simplified filing system according to the present invention is applied. On the filing (storing) of image data in this simplified filing system, its actions will be explained hereafter together with its construction based on drawings. Fig. 3 is a flow chart showing this working procedure, while Fig. 4 is an explanatory drawing showing a form of transfer.

As shown in Fig. 2, simplified filing devices 100, 200, 300 are connected, respectively, to a trunk line C such as Ethernet, etc. through transmission line A, and a connector B such as transceiver, etc., and a server 10 is connected to said trunk line C. While a construction using LAN is given as example here, (the network) is not restricted to a network of this construction but may be a public telephone line, a public high-speed digital circuit like ISDN or a radio circuit. In this embodiment, explanation will be given on the assumption that a simplified filing device 100 (hereinafter referred to as "operating device 100") in the system construction as indicated in Fig. 2 is operated.

First, the user instructed filing of an image data by inputting an device ID composed of a 4-digit figure, etc. of the simplified filing device to be specified as filing destination, by using the LCD panel with touch panel of the operating device 100 and the operating panel 101a of an operating means 101 provided with a plurality of keys such as ten keys, etc. Then this device ID and the instructed information are kept in the panel control unit 101b of said operating means 101. And when the start button of said operating panel 101a is pressed down, the panel control unit 101b instructs reading of original image, to an image data input means 102 such as digital scanner, etc. for example, and notifies the filing destination device ID and instructs filing of the image data to an image control means 103 (Fig. 3, step S1).

Upon receipt of said instruction, said image data input means 102 reads the original image, digitizes it and stores it as image data in a buffer 104 (step S2). At the same time, said image control means 103, upon receipt of the filing instruction of said image data, judges if notified said filing destination device ID agrees with the device ID of own device or not (step S3).

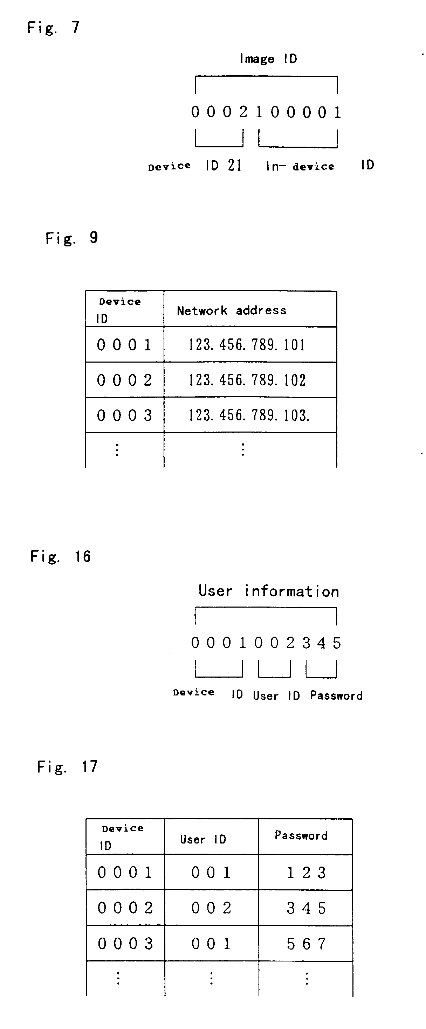

In the case where, as a result of this judgement, said filing destination device ID agreed with the device ID of own device, (said image control means 103) makes filing in its own device and, for that purpose, generates an image ID as shown in Fig. 7 constituted with an in-device ID and said device ID of own device, composed of an 8-digit figure, etc., for example, corresponding to the image data to be filed from now (step S4).

Next, a registration & transfer means 112 stores said image data stored in said buffer 104, by attaching a file name based on said image ID received from said image control means 103, in an image storing means 105 such as hard disc, etc., for example (step S5).

Next, said image ID generated by said image control means 103 is encoded in an image ID mark such as image pattern, etc. of a 2-dimensional barcode, for example, by an image ID encoding means 107. The encoded image ID mark is stored in the bit map memory of a pattern synthesizing means 108.

Of said image data read as above, the image data used as image with image ID mark, to be described later, is once stored in said buffer 104 or stored in said image storing means 105, and then read out again from said image storing means 105 and stored in said buffer 104.

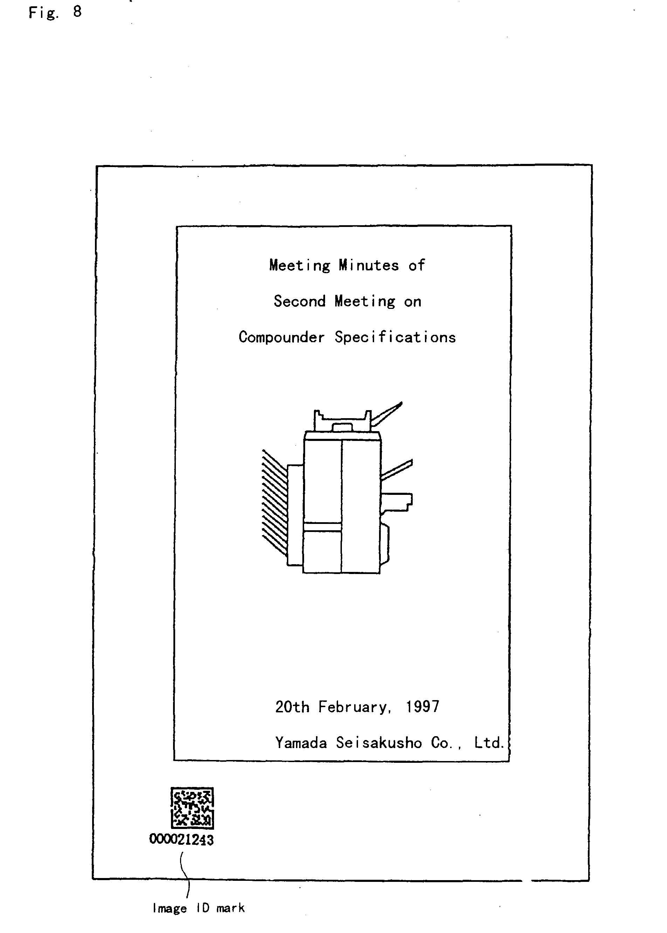

Next, said pattern synthesizing means 108 combines the image ID mark stored in said bit map memory and the image data kept in the buffer 104 as image with image ID mark (step S7). This combined image with image ID mark is printed, by an image forming means 109 such as printer, etc. of electronic photo system for example, by using toner or ink, etc. on a printing sheet in the form in which said image data and said image ID mark indicated in Fig. 8 are combined at prescribed position (step S8). When said image data is composed of a plural number of pages, the image data of a specific page or the first page, for example, may be used to be combined.

On the contrary, in the case where, as a result of said judgement, said filing destination ID did not agree with the device ID of own device, namely when the filing destination device of said image data is other simplified filing device (simplified filing device is assumed in this embodiment, hereinafter referred to as "filing destination device 200"), said image control means 103 notifies a communication means 110 of said filing destination ID. The communication means 110 transmits this filing destination ID, through the network, to the server 10 controlling the network address of a plurality of said simplified filing devices, and requests address solution. Namely, the above communication means 110 requests transfer of the network address of said filing destination device 200 (step S10, and processing of Fig. 4 (1)).

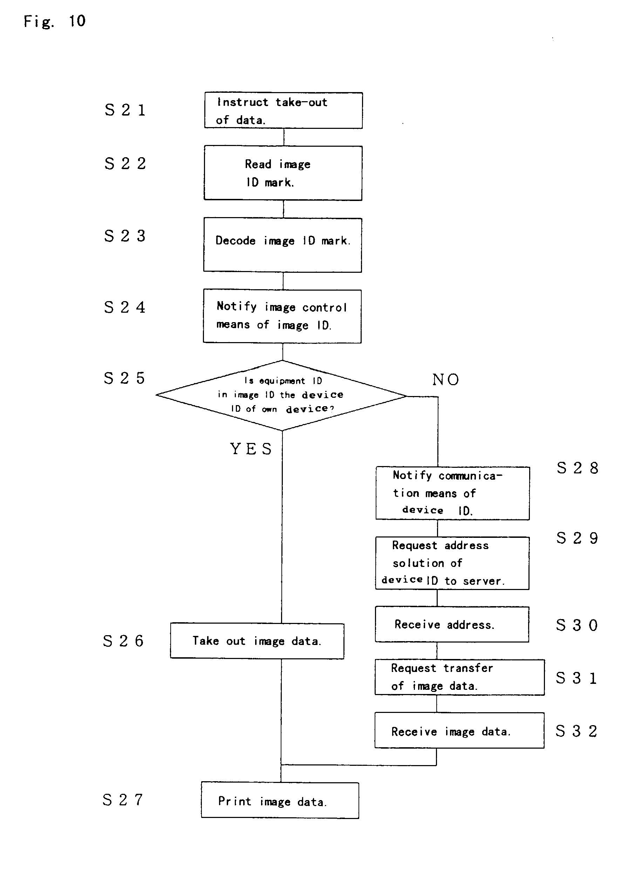

On the other hand, the storing means 12 of said server 10 is provided with an address control information table 12a as shown in Fig. 9 for controlling the network address of a plurality of said simplified filing devices in correspondence to said device ID. Therefore, the communication means 110 of said server 10, upon receipt of a request for address solution as described above, notifies the address control means 13 of said filing destination device ID. The address control means 13 identifies the network address corresponding to said filing destination device ID by having access to said address control information table 12a (Fig. 4, processing (2)), and returns it to said operating device 100, to which said request for address solution was made, through said communication means 110 (step S11, and processing (3) of Fig. 4).

Next, said communication means 110, upon receipt of said network address, connects said operating device 100 and said filing destination device 200, through the network, based on that network address, and transfers said image data to the filing destination device 200 (step S12, and processing (4) of Fig. 4).

Said filing destination device 200, upon receipt of the transfer of said image data, generates an image data constituted by said in-device ID and the device ID of own device (filing destination device 200) corresponding to the image data to be filed, and executes the filing (Fig. 4, processing (5)). On the other hand, the image ID generated as described above is also transmitted to said operating device 100 (step S13, and processing (6) of Fig. 4).

Said image ID received as above by said operating device 100 is encoded on said image ID mark by said image ID encoding means 107, and the subsequent processing is also performed in the same way as the case of filing in said own device, and said image with image ID mark is printed (step S6→S7→S8).

Said image with image ID mark is used as described below, to take out image data stored in said own device or other simplified filing device as explained above.

Moreover, said image data in the case where the filing destination of said image data is other simplified filing device can be transferred in two different forms indicated hereafter, in place of said form of transfer (first form of transfer).

In the first place, regarding the second form of transfer in said filing, explanation will be given hereafter based on Fig. 5, on the processing to be made after it was judged that said filing destination device ID does not agree with the device ID of own device as a result of the judgement of whether or not said filing destination device ID agrees with the device ID of own device (step S3) in said explanation.

Said image control means 103 notifies said communication means 110 of said filing destination device ID. The communication means 110 transmits, through the network, a request for filing in filing destination device 200 corresponding to said filing destination device ID and the device ID concerned, to said server 10 (Fig. 5, processing (1)). Said communication means 11 of said server 10, upon receipt of the request for filing, notifies the address control means 13 of said filing destination device ID. The address control means 13 identifies the network address corresponding to said filing destination device ID, by having access to said address control information table 12a (Fig. 5, processing (2)).

Next, said communication means 11 transmits the network address of said operating device 100 to said filing destination device 200, based on the network address concerned, and notifies that there is a request for filing (Fig. 5, processing (3)).

The communication means 210 of the filing destination device 200 establishes connection, through the network, with said operating device 100, based on the transmitted network address of said operating device 100, and makes a request for transfer of said image data (Fig. 5, processing (4)).

Next, said communication means 110 of said operating device 100, upon receipt of the request for transfer, transfers said image data to said filing destination device 200 (Fig. 5, processing (5)).

Said filing destination device 200, upon receipt of the transfer of said image data, generates an image data, constituted by said in-device ID and the device ID of own device (filing destination device 200), corresponding to the image data to be filed from now, and executes the filing (Fig. 5, processing (6)). The processing thereafter is the same as that in said embodiment.

Next, regarding the third form of transfer in said filing, explanation will be given hereafter based on Fig. 6, in the same way as in said second form of transfer.

Said image control means 103 notifies said communication means 110 of said filing destination device ID. The communication means 110 transmits, through the network, the filing destination device ID and said image data to said server 10, and makes a request for address solution and a request for transfer, to transmit the network address of the filing destination device 200 corresponding to the device ID concerned (Fig. 6, processing (1)).

Said communication means 11 of said server 10, upon receipt of the request for address solution and the request for transfer, notifies the address control means 13 of said filing destination device ID. The address control means 13 identifies the network address corresponding to said filing destination device ID, by having access to said address control information table 12a (Fig. 6, processing (2)). Next, said communication means 11 establishes connection, through said network, with said filing destination device 200, based on the network address, and transfers said image data (Fig. 6, processing (3)).

Said filing destination device 200, upon receipt of the transfer of said image data, generates an image data, constituted by said in-device ID and the device ID of own device (filing destination device 200), corresponding to the image data to be filed from now, and executes the filing (Fig. 6, processing (4)). On the other hand, the image ID generated as above is also transmitted to said operating device 100, through said server 10 (Fig. 6, processing (5)). The processing thereafter is the same as that in said embodiment.

As described above, in said simplified filing system, even when the simplified filing device is away from the operating device, the operating device user can file an image data to the destination device.

### (EMBODIMENT 2)

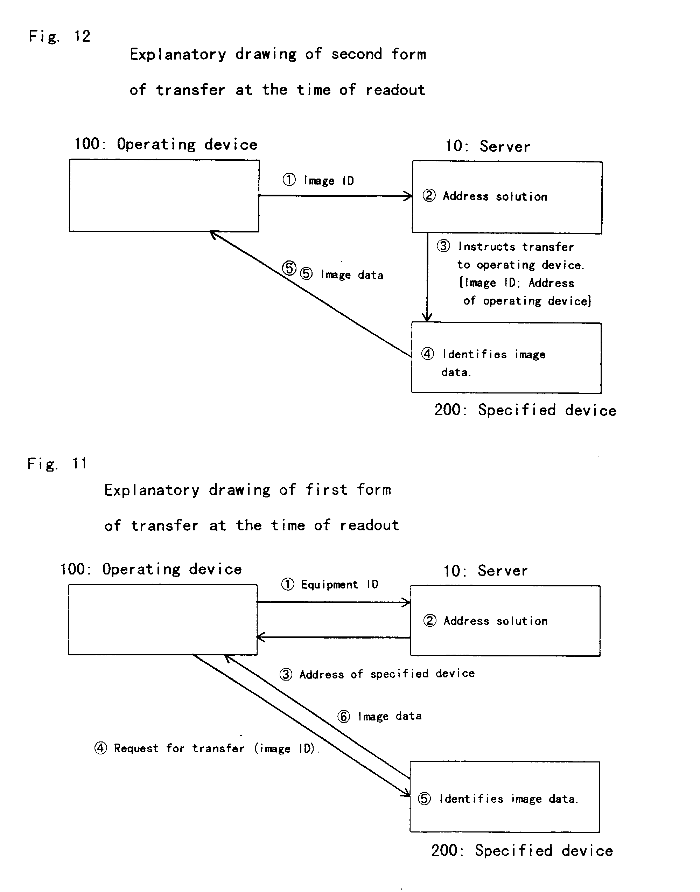

Next, explanation will be given on the actions of specifying image data by using said image with image ID mark and taking out that image data, in a simplified filing system of said construction. Fig. 10 is a flow chart showing this operation, while Fig. 11 is an explanatory drawing showing a form of transfer. Although, in this embodiment, said image with image ID mark is used in the specification of said image data, this method is not limitative but a method with direct input of image ID, etc. is also workable.

First, when the user instructed take-out of an image data using said image with image ID mark, by using said operating panel 101a of said operating device 100, this instructed information is held in said panel control unit 101b and, when the start button of said operating panel 101a is pressed down, the panel control unit 101b instructs reading of image with image ID mark, to said image data input means 102 (Fig. 10, step S21).

Upon receipt of said instruction, said image data input means 102 reads said image with image ID mark, digitizes and stores it as image data in said buffer 104 (step S22). Next, an image decoding means 111 reads the image data placed with an image ID mark, from the image data stored in the buffer 104. The image decoding means 111 decodes that image ID mark (step S23) to obtain the image ID of the cover original image with said image ID mark, and informs it to said image control means 103 (step S24).

Said image control means 103, judges if the device ID contained in notified said image ID agrees with the device ID of own device or not (step S25).

In the case where, as a result of this judgement, said device ID agreed with the device ID of own device, namely when said object image data is filed in said operating device 100, said image control means 103 instructs reading of the image data corresponding to said image ID to the registration & transfer means 112 (step S26). In response to this instruction, the registration & transfer means 112 reads out the image data in said image file from said image storing means 105 into said buffer 104, and said image data read out this way is printed on sheet by said image forming means 109 (step S27).

On the contrary, in the case where, as a result of said judgement, said device ID did not agree with the device ID of own device, namely in the case where said object image data is filed in other simplified filing device (simplified filing device is assumed in this embodiment 200, hereinafter referred to as "specified device 200"), said image control means 103 notifies said communication means 110 of said device ID (step S28).

The communication means 110 transmits this filing destination ID, through the network, to said server 10, and requests address solution, so as to transmit the network address of said specified device 200 corresponding to the device ID concerned (step S29, and processing (1) in Fig. 11).

Said communication means 11 of said server 10, upon receipt of the request for address solution, notifies the address control means 13 of said device ID. The address control means 13 identifies the network address of said specified device 200 corresponding to said device ID, by having access to said address control information table 12a (Fig. 11, processing (2)), and returns this network address to said operating device 100 (step S30, and processing (3) in Fig. 11).

Next, said communication means 110, upon receipt of said network address, establishes connection with said specified device 200, in which the image data read out through the network based on the network address is stored, and requests the specified device 200, by sending said image ID, to transfer said image data (step S31, and processing (4) in Fig. 11).

Said specified device 200, upon receipt of the request for transfer of said image data, reads out the image data of the image file corresponding to said image ID (Fig. 11, processing (5)), and transmits this image data to said operating device 100 (step S32, and processing (6) in Fig. 11). Said image data received this way is printed on sheet by said image forming means 109 in the same way as in said readout from own device (step S27).

Moreover, also in the take-out action of image data as in the case of said filing, the transfer of said image data in the case where the object image data is stored in other simplified filing device can be made in 2 different forms indicated hereafter, in place of said form of transfer (first form of transfer). First, regarding the second form of take-out action of said image data, explanation will be given hereafter based on Fig. 12, on the processing to be made after it was judged that said filing destination device ID in said explanation does not agree with the device ID of own device as a result of the judgement of whether or not said filing destination device ID agrees with the device ID of own device (step S25) in said explanation.

Said image control means 103 notifies said communication means 110 of said image ID. The communication means 110 transmits, through the network, the image ID to said server 10, and makes a request for transfer of the image data corresponding to the image ID concerned (Fig. 12, processing (1)).

Said communication means 11 of said server 10, upon receipt of the request for transfer, notifies the address control means 13 of said image ID. The address control means 13 identifies the network address corresponding to said device ID contained in said image ID, by having access to said address control information table 12a (Fig. 12, processing (2)). Next, based on the network address concerned, said communication means 11 transmits, to said specified device 200, the network address of said operating device 100 and said image ID, and notifies that there is a request for transfer (Fig. 12, processing (3)).

Said specified device 200, upon receipt of the image ID, reads out the image data of the image file corresponding to the transmitted image ID (Fig. 12, processing (4)), and transmits this image data to said operating device 100 (Fig. 12, processing (5)). The processing thereafter is made in the same way, and printing is made on sheet by said image forming means 109.

Next, explanation will be given hereafter on the third form of transfer in the take-out action of said image data, based on Fig. 13, in the same way as for said second form of transfer.

Said image control means 103 notifies said communication means 110 of said image ID. The communication means 110 transmits, through the network, the image ID to said server 10, and makes a request for transfer of the image data corresponding to the image ID concerned (Fig. 13, processing (1)).

Said communication means 11 of said server 10, upon receipt of the request for transfer, identifies the network address corresponding to the device ID contained in said image ID, by having access to said address control information table 12a (Fig. 13, processing (2)). Next, based on said network address, said communication means 11 transmits, to said specified device 200, said image ID, and makes a request for transfer of the image data corresponding to the image ID concerned (Fig. 13, processing (3)).

Said specified device 200, upon receipt of the image ID, reads out the image data of the image file corresponding to the transmitted image ID (Fig. 13, processing (4)), and transmits this image data to said server 10 (Fig. 13, processing (5)). Said server 10 transmits this transmitted image data to said operating device 100 (Fig. 13, processing (6)). The processing thereafter is made in the same way, and printing is made on sheet by said image forming means 109.

As described above, in said simplified filing system, even in the case where the image data to be read out is stored in other simplified filing device connected to said network, it is possible to make a transfer of said image data from said other simplified filing device, by first performing address solution with said server which integrally controls the network addresses of said simplified filing device.

Now, when no change is made in the network address of said simplified filing device of the construction indicated in said embodiments 1, 2, all need to be done is to simply rewrite, in said server 10, the network address field corresponding to the device ID of said changed simplified filing device on said address control information table 12a with a new network address. At that time, it is not necessary to change the setting of the simplified filing device in accordance with the changed device ID.

Therefore, even if a large number of simplified filing devices are connected to the network and some change is made to their network addresses, just changing said address control information table of said server 10 is enough. Consequently, it becomes possible to sharply reduce the man-hours required for the change of addresses and facilitate the address control, compared with a case where each simplified filing device is provided with a table corresponding to said address control information table 12a.

### (EMBODIMENT 3)

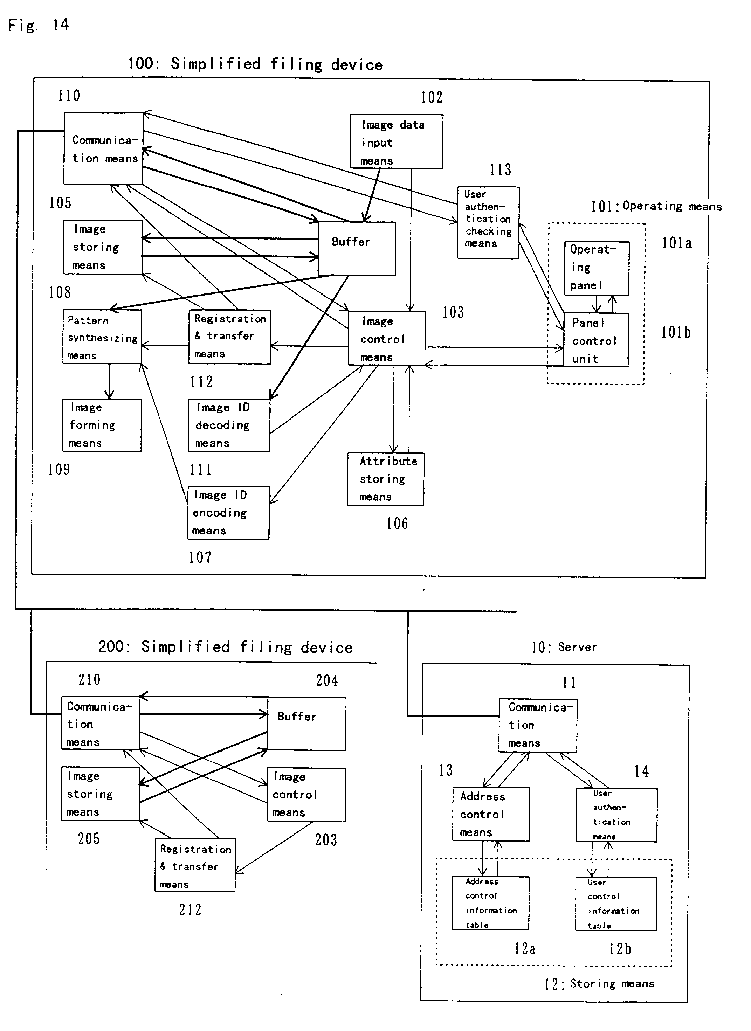

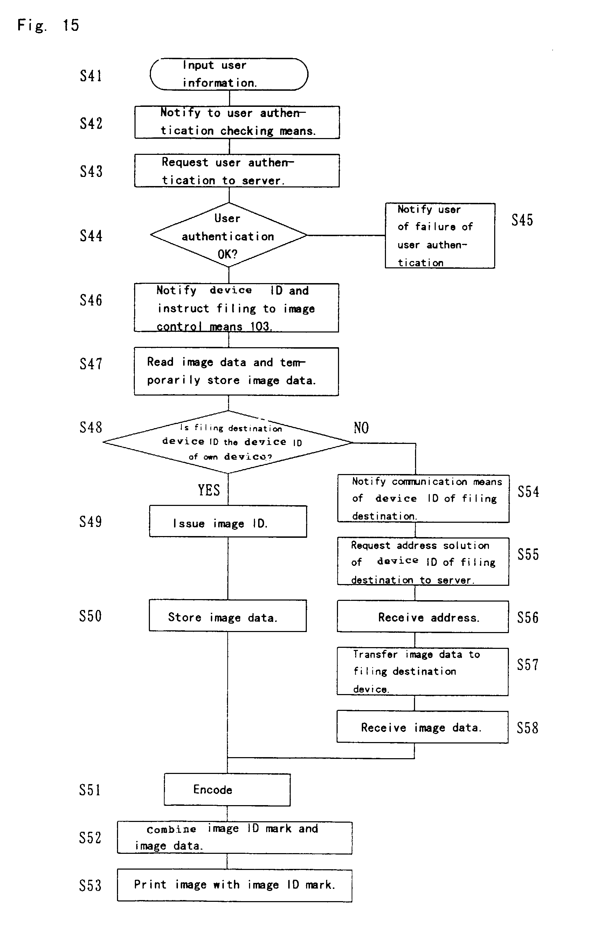

Fig. 14 is a block diagram showing the construction in other embodiment of a simplified filing system according to the present invention and its actions will be explained hereafter, regarding the filing (storing) of image data in this simplified filing system, together with its construction based on drawings. Fig. 15 is a flow chart showing this working procedure. The system construction is the same as the system construction of said embodiment 1, and it is presupposed that simplified filing device 100 is used. For constructions similar to those of said embodiment 1, the same symbols will be used but explanation on them will be omitted here.

First, the user makes user authentication, with the use of said operating panel 101a, by inputting the device ID of the device in which the user himself is registered as user, and user information composed of user ID and password as shown in Fig. 16 (Fig. 15, step S41). This user authentication can also be made by having a magnetic card, in which said device ID, user ID and password are recorded in advance, read by a magnetic card reader connected to said operating panel 101a.

Said user information input is kept in the panel control unit 101b of said operating means 101 and, as the start button of said operating panel 101a is pressed, said panel control unit 101b notifies a user authentication checking means 113 of said user information (step S42). The user authentication checking means 113 transmits said user information to said communication means 110 and, through said network, to said server 10, and requests a user authentication (step S43).

On the other hand, the storing means 12 of said server 10 is provided with a user control information table 12b, as shown in Fig. 17, for controlling the user information registered in said plurality of units of said simplified filing device. The communication means 11 of said server 10, upon receipt of a request for user authentication as described above, notifies a user checking means 14 of said user information. The user checking means 14 performs user authentication by checking if any record agreeing with said user information exists in said user control information table 12b or not, and sends the result to said operating device 100 (step S44).

In case of failure of said user authentication, it is informed to the user by giving an indication such as "user authentication failed", etc. on said operating panel 101a, for example.

On the other hand, when the user authentication succeeds, the user gives an instruction for operation, namely an instruction for filing of image data here. This instruction is kept in the panel control unit 101b of said operating means 101 and, as the start button of said operating panel 101a is pressed, said panel control unit 101b gives an instruction for reading original image to said image data input means 102, and notifies the image control means 103 of the device ID contained in said user information, and gives an instruction for filing of said image data to it (step S46).

Upon receipt of said instruction, said image data input means 102 reads the original image, digitizes and stores it as image data in a buffer 104 (step S47). At the same time, said image control means 103, upon receipt of the filing instruction of said image data, judges if the notified device ID contained in said user information agrees with the device ID of own device or not (step S48).

In the case where, as a result of this judgement, said filing destination device ID agreed with the device ID of own device, (said image control means 103) makes filing in its own device and, for that purpose, generates an image ID, constituted with an in-device ID and said device ID of own device, corresponding to the image data to be filed (step S49). Next, a registration & transfer means 112 stores said image data stored in said buffer 104, by attaching a file name based on said image ID received from said image control means 103, in an image storing means 105 such as hard disc, etc., for example (step S50).

Attribute information such as "date of registration", "access right", etc. corresponding to said stored image data can be stored in the attribute table of an attribute storing means 106 with said image control means 103, and the setting of said access right can be made with said operating panel 101a.

Next, said image ID generated by said image control means 103 is encoded into said image ID mark by an image ID encoding means 107. The encoded image ID mark is registered in the bit map memory of a pattern synthesizing means 108 (step S51).

Next, said pattern synthesizing means 108 combines the image ID mark stored in said bit map memory and the image data held in the buffer 104 as image with image ID mark (step S52). This combined image with image ID mark is printed, by said image forming means 109, by using toner or ink, etc. on a sheet in the form in which said image data and said image ID mark are composed at prescribed position, as shown in Fig. 8 (step S53). In the case where said image data is composed of a plural number of pages, the image data of a specific page or the first page, for example, may be used to be combined.

On the contrary, in the case where, as a result of said judgement, the device ID contained in said user ID information did not agree with the device ID of own device, said image data read is stored in the simplified filing device specified by the device ID contained in said user ID information (simplified filing device is assumed also in this embodiment, hereinafter referred to as "filing destination device 200"). Here, said image control means 103 notifies said communication means 110 of the device ID contained in said user ID information (step S54). The communication means 110 transmits this device ID, through the network, to said server 10, and requests address solution for transmitting the network address of the simplified filing device corresponding to the device ID concerned (step S55).

The communication means 11 of said server 10, upon receipt of the request for address solution, notifies the address control means 13 of said device ID. The address control means 13 identifies the network address of said filing destination device 200, corresponding to said device ID, by having access to said address control information table 12a, performs address solution and returns (the network address) to said operating device 100 by means of said communication means 11 (step S56).

Next, said communication means 110, upon receipt of the request for transfer, connects the operating device 100 with said filing destination device 200 through the network, and transfers said image data to the filing destination device 200 (step S57).

Said filing destination device 200, upon receipt of the transfer of said image data, generates an image ID, constituted by said in-device ID and the device ID of own device (filing destination device 200), corresponding to the image data to be filed, and executes the filing. On the other hand, the image ID generated as above is also transmitted to said operating device 100 (step S58).

Said image ID received as above by said operating device 100 is encoded into said image ID mark by said image ID encoding means 107, and the subsequent processing is also performed in the same way as the case of filing in said own device, and said image with image ID mark is printed (step S51 →S52 →53).

While, in this embodiment, address solution is made by said server which integrally controls the network addresses of said simplified filing device, it is also possible to construct the system in such a way as to provide the respective simplified filing devices with an address information control table and perform address solution at the respective simplified filing devices.

### (EMBODIMENT 4)

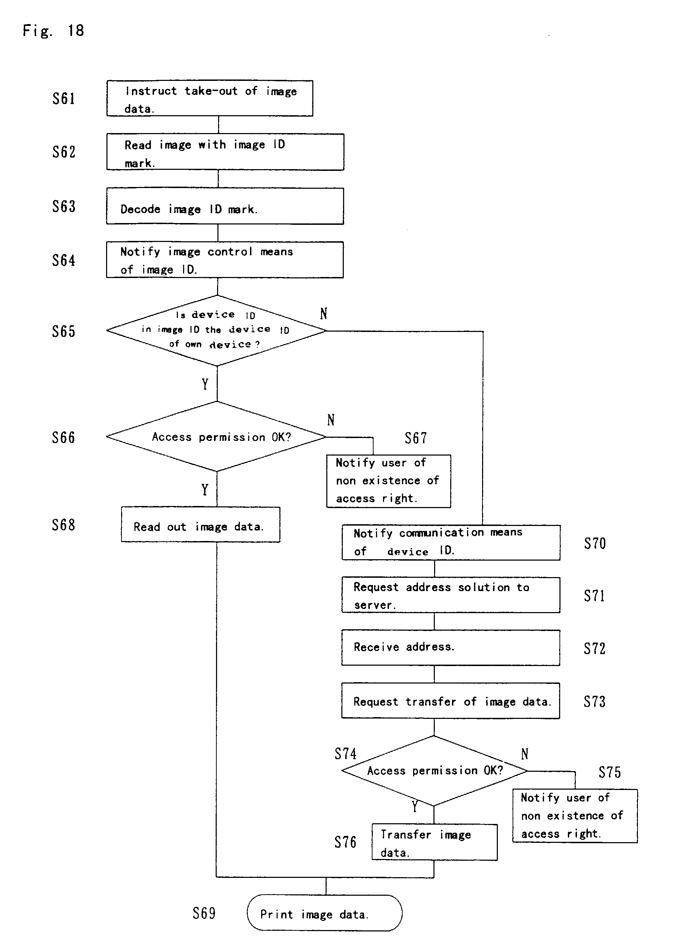

Next, explanation will be given on the actions of specifying image data by using said image with image ID mark and taking out that image data, in a simplified filing system of said construction. Fig. 18 is a flow chart showing this operation. Although said image with image ID mark is used in the specification of said image data also in this embodiment in the same way as said embodiment 2, this method is not limitative but a method with direct input of image ID, etc. is also workable.

First, the user makes user authentication, with the use of said operating panel 101a, by inputting the said user information. This user authentication procedure is the same as that in said filing operation and therefore explanation on it is omitted here, and only the processing to be made after said user authentication became successful will be given hereafter.

In the case where the user authentication was made successfully, the user gives an instruction for operation, namely an instruction for take-out of image data using said image with image ID mark here. This instructed information is held in said panel control unit 101b and, as the start button of said operating panel 101a is pressed, said panel control unit 101b gives an instruction for reading of said image with image ID mark to said image data input means 102 (step S61).

Upon receipt of said instruction, said image data input means 102 reads said image with image ID mark, digitizes and stores it in said buffer 104 (step S62). Next, an image decoding means 111 extracts the portion of image data pointed with the image ID mark, from the image data stored in the buffer 104, decodes that image ID mark (step S63) to obtain the image ID of the image, and informs it to said image control means 103 (step S64).

Said image control means 103 judges if the device ID contained in notified said image ID agrees with the device ID of own device or not (step S65).

In the case where, as a result of this judgement, said device ID agreed with the device ID of own device, namely when said object image data is filed in said operating device 100, said image control means 103 gains access, based on said image ID, to the attribute information table of an attribute storing means 106, and determines if reading of image data corresponding to said image ID is allowed to said user or not (step S66). In the case where reading is not allowed here, (said image control means 103) informs to that effect to said user by means of a display on said operating panel 101a, etc., for example (step S67). If reading is permitted, said image control means 103 instructs, to a registration & transfer means 112, reading of image file corresponding to said image ID (step S68). In response to this instruction, the registration & transfer means 112 reads out the image data in said image file from said image storing means 105 into said buffer 104, and said image data read out this way is printed on sheet by said image forming means 109 (step S69).

On the contrary, in the case where, as a result of said judgement, said device ID did not agree with the device ID of own device, namely in the case where said object image data is filed in other simplified filing device (simplified filing device is assumed in this embodiment 200, hereinafter referred to as "specified device 200"), said image control means 103 notifies said communication means 110 of said device ID (step S70). The communication means 110 transmits the device ID to said server 10 through the network, and requests address solution for transmitting network address of said specified device 200 corresponding to the device ID concerned (step S71).

Said communication means 11 of said server 10, upon receipt of the request for address solution, notifies the address control means 13 of said device ID. The address control means 13 identifies the network address corresponding to said device ID, by having access to said address control information table 12a, and returns it to said operating device 100 (step S72).

Next, said communication means 110, upon receipt of said network address, establishes connection with said specified device 200, in which the image data read out through the network based on the network address is stored, and requests the specified device 200, by sending said image ID, to transfer said image data (step S73).

The image control means 203 of said specified device 200, upon receipt of the request for transfer of said image data, gains access, based on transmitted said image ID, to the attribute information table of an attribute storing means 206, and determines if reading of image data corresponding to said image ID is allowed to said user or not (step S74). When reading is not allowed here, this judgement is notified to said operating device 100 (step S75).

On the other hand, if reading is permitted, said image control means 203 reads out the image data in the image file corresponding to said image ID, and transmits this image data to said operating device 100 (step S76). Said image data received this way is printed on sheet by said image forming means 109, in the same way as in the case of reading from said own device (step S69).

Now, in case there is any addition or deletion of user or change of password registered in said simplified filing device of the construction indicated in said embodiments 3, 4, all need to be done is to simply rewrite the items of change in the respective fields of said user control information table 12b on said server 10. Then it is not necessary to change setting of said modified simplified filing device.

Therefore, even if a large number of simplified filing devices are connected to the network and some changes are made to their user information, it is enough to change said user control information table of said server 10 alone. Consequently, it becomes possible to sharply reduce the man-hours required for the change of user information and facilitate the user control, compared with a case where each simplified filing device is provided with a table corresponding to said user control information table 12b.

As described above, in said simplified filing system, even in the case where the image data to be read out is stored in other simplified filing device connected to said network, it is possible to have user authentication integrally performed by said server 10, and make reading access control based on that result, and take out image file through a network maintaining confidentiality.

### (EMBODIMENT 5)

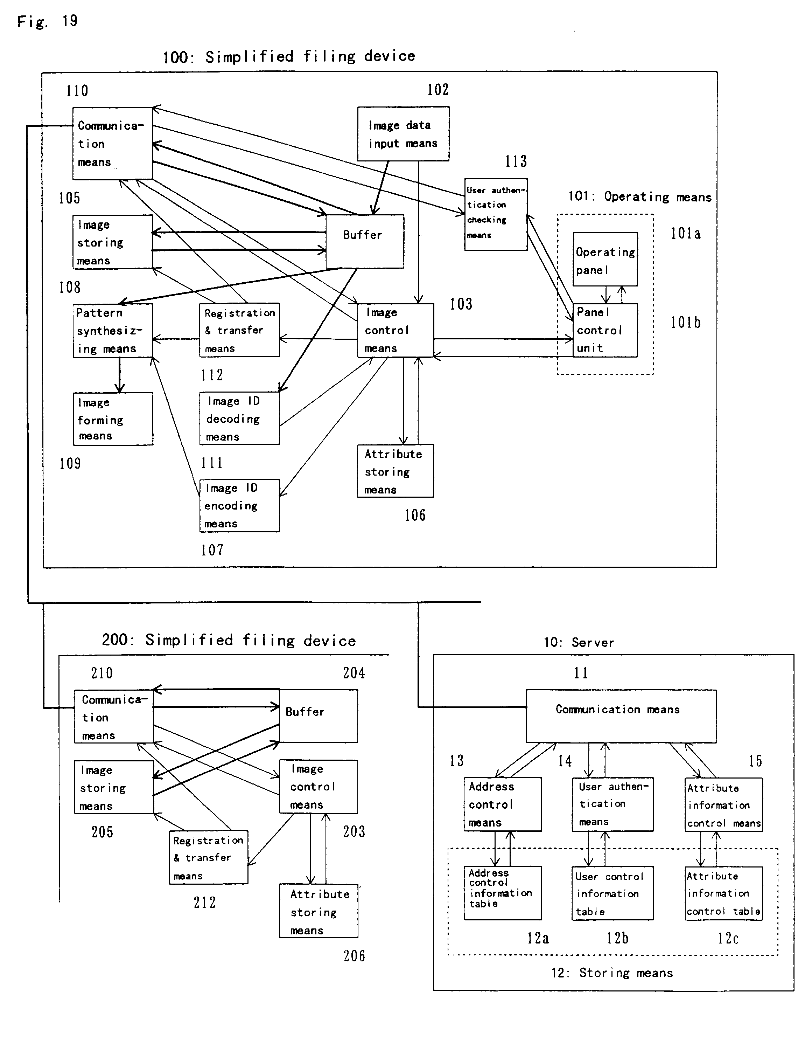

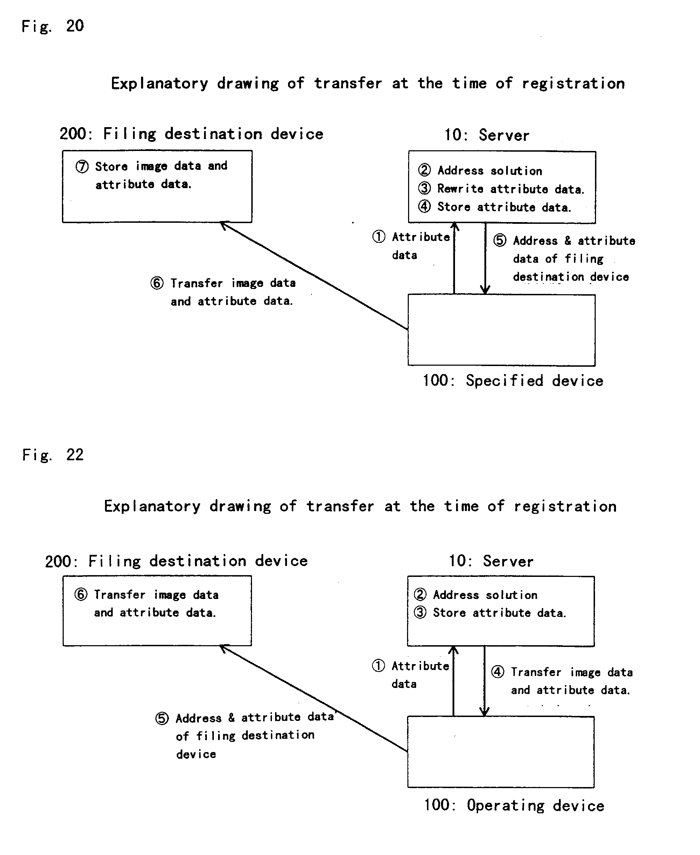

Fig. 19 is a block diagram showing the construction in other embodiment of a simplified filing system according to the present invention and its actions will be explained hereafter, regarding the filing (storing) of image data in this simplified filing system, together with its construction based on drawings. Fig. 20 is a flow chart showing the transfer procedure of this embodiment. The system construction is the same as the system construction of said respective embodiments, and it is presupposed that the user operates a simplified filing device 100. For constructions similar to those of said respective embodiments, the same symbols will be used but explanation on them will be omitted.

While the generation of said image ID was made with said filing destination device 200 in said embodiments 1, 3, for a case where the filing destination of said image data is other simplified filing device (filing destination device 200), it is made with said operating device 100 in this embodiment.

First, the user makes user authentication, with the use of said operating panel 101a, by inputting said user information. Explanation on this user authentication and the processing of performing filing in own device will be omitted here because they are the same as in said embodiment 3, and explanation will be given hereafter on the processing of the case where the filing destination of said image data is other simplified filing device (filing destination device 200), after the judgement if the device ID contained in said user information agrees with the device ID of own device or not (step S48 in said embodiment 3).

In the case where, as a result of said judgement, the device ID contained in said user information does not agree with the device ID of own device, said image data which has been read is stored in said filing destination device 200 specified by the device ID contained in said user information. Here, said image control means 103 generates, in the same way as in the case of filing in own device, an image ID, constituted with an in-device ID and said device ID of own device, corresponding to the image data to be filed from now, and stores attribute data such as said "image ID", "user information" and "date of registration", etc. corresponding to said image data to be stored, in the attribute table of said attribute storing means 106. Moreover, said image control means 103 notifies said communication means 110 of said attribute data.

The communication means 110 transmits said attribute data, through the network, to said server 10, and requests address solution to transmit the network address of said filing destination device 200 corresponding to the device ID contained in said user information (Fig. 20, processing (1)).

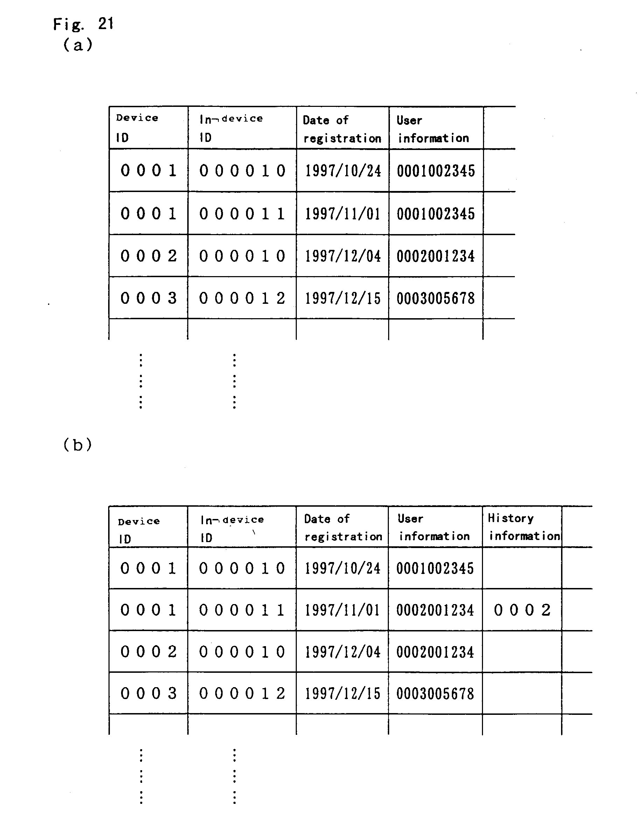

On the other hand, the storing means 12 of said server 10 is further provided with an attribute control information table 12c as shown in Fig. 21 (a) for controlling said attribute data corresponding to said image data stored in a plural number of said simplified filing devices. Therefore, the communication means 11 of said server 10, upon receipt of a request for address solution as described above, notifies the address control means 13 of said device ID contained in said attribute data. The address control means 13 identifies the network address of said filing destination device 200 corresponding to said device ID, by having access to said address control information table 12a (Fig. 20, processing (2)).

Moreover, the attribute information control means 15 of said server 10 checks the device ID issued by said filing destination device 200 by referring to said attribute control information table 12c based on said device ID, and executes the processing for rewriting the image ID contained in said attribute data with an image ID yet to be issued by said filing destination device 200 (Fig. 20, processing (3)). After completion of this rewriting, said attribute data is stored in said attribute control information table 12c (Fig. 20, processing (4)).

The attribute data which has been submitted to said rewriting and the network address of said filing destination device 200 are returned, by the communication means 11 of said server 10, to said operating device 100 (Fig. 20, processing (5)).

Next, said communication means 110, upon receipt of said network address and said attribute data, connects the operating device 100 and said filing destination device 200, through the network, based on that network address, and transfers said image data and said attribute data to the filing destination device 200 (Fig. 20, processing (6)). Moreover, said communication means 110 notifies said image control means 103 of said attribute data.

Said filing destination device 200, upon receipt of the transfer of said image data and said attribute data, executes the filing of said image data and attribute data in correspondence to said image ID contained in the attribute data concerned (Fig. 20, processing (7)).

On the other hand, the image ID contained in the attribute data concerned notified to said image control means 103 is encoded into said image ID mark by said image ID encoding means 107, and the subsequent processing is also performed in the same way as the case of filing in said own device, and said image with image ID mark is printed.

Attribute data can be rewritten by the image control means 103 of said filing destination device 200 instead of said server 10, to be transferred to said server 10.

Explanation will be omitted on the take-out of image data at the simplified filing system of the construction of this embodiment, because it can be made in the same way as in said embodiments 2, 4.

### (EMBODIMENT 6)

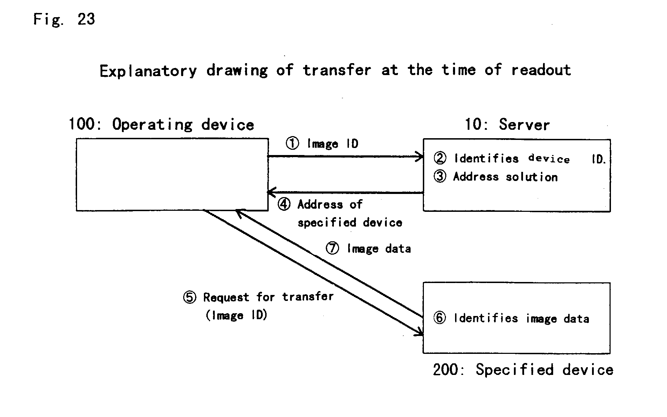

Regarding the case where said image data is filed, on a simplified filing system of the construction as described in said embodiment 5, without making any rewriting of said attribute data in the transfer when said image data is filed, the process will be explained hereafter along with the construction based on drawings. Fig. 22 is an explanatory drawing showing the transfer procedure at this time.

Explanation will be omitted on the procedure of generation of said image ID by said image control means 103, storing of said attribute data in the attribute table of said attribute storing means 106 and up to notification of said attribute data to said communication means 110, which are the same as in said embodiment 5, and explanation will be given on the subsequent processing steps.

Said communication means 110, upon receipt of notification of said attribute data, transmits said attribute data, through the network, to said server 10, and requests address solution, so as to transmit the network address of said specified device 200 corresponding to the device ID contained in said user information (Fig. 22, processing (1)).

Said communication means 11 of said server 10, upon receipt of the request for address solution, notifies the address control means 13 of said device ID contained in said attribute data. The address control means 13 identifies the network address of said specified device 200 corresponding to said device ID, by having access to said address control information table 12a (Fig. 22, processing (2)), and returns (this network address) to said operating device 100 which made said request for address solution by means of said communication means 11 (Fig. 22, processing (4)).

Moreover, in said attribute control information table 12c of said server 10 are set history information items showing that said image data to be filed have been transferred and filed, as shown in Fig. 21 (b). Therefore, the attribute information control means 15 of said server 10 stores said history information (said device ID of said filing destination device 200 in this embodiment) in said attribute control information table 12c together with said attribute data (Fig. 22, processing (3)).

Next, said communication means 110, upon receipt of said network address, connects the operating device 100 and said filing destination device 200, through the network, based on that network address, and transfers said image data and said attribute data to the filing destination device 200 (Fig. 22, processing (5)). Said filing destination device 200, upon receipt of said network address, executes the filing of said attribute data in correspondence to said image ID contained in the attribute data concerned (Fig. 22, processing (6)).

On the other hand, the image ID generated in said image control means 103 is encoded into said image ID mark by said image ID encoding means 107, and the subsequent processing is also performed in the same way as the case of filing in said own device, and said image with image ID mark is printed.

As described above, while no rewriting of said attribute data is made in the transfer when said image data is filed, said history information is stored in said attribute control information table 12c of said server 10. This makes it possible to read out said image data as described below.

### (EMBODIMENT 7)

Explanation will be given on the actions of taking out image data filed as above, on a simplified filing system of the construction as described in said embodiment 6. Fig. 23 is an explanatory drawing showing the transfer procedure at this time. Explanation will be omitted on the procedure of reading of said image with image ID mark and up to acquisition of said image ID, which are the same as in said embodiment 4, and explanation will be given on the subsequent processing steps.

Said image control means 103 judges if the image data corresponding to notified said image ID exists in own device (operating device 100) or not, by having access to said attribute storing means 106.

In the case where, as a result of this judgement, said object image data is found to be filed in own device, (said image control means 103) reads out and outputs said image data in the same way as in said embodiments 2, 4.

On the other hand, in the case where said image data is not filed in own device, said image control means 103 notifies said communication means 110 of said image ID. The communication means 110 transmits, through the network, the image ID concerned to said server 10, and requests address solution for transmitting the network address of said other simplified filing device in which said image data corresponding to the image ID concerned exists (simplified filing device is assumed in this embodiment 200, hereinafter referred to as "specified device 200") (Fig. 23, processing (1)).

Said communication means 11 of said server 10, upon receipt of the request for address solution, notifies the attribute information control means 15 of said image ID. The attribute information control means 15 checks if said attribute information is set or not, by having access to said attribute information table 12c. In the case where said history information is set, said attribute information control means 15 obtains this history information, i.e. the device ID of said specified device 200, and informs it to said address control means 13. In the case where said history information is not set, (said attribute information control means 15) notifies said address control means 13 of the device ID contained in said image ID (Fig. 23, processing (2)).

Said address control means 13 identifies the network address corresponding to said device ID, by having access to said address control information table 12a (Fig. 23, processing (3)), and returns it to said operating device 100 (Fig. 23, processing (4)).

Next, said communication means 110, upon receipt of said network address, establishes connection with said specified device 200, in which the image data read out through the network based on the network address is filed, and requests the specified device 200, by sending said image ID, to transfer said image data (Fig. 23, processing (5)).

The image control means 203 of said specified device 200, upon receipt of the request for transfer of said image data, reads out the image data in the image file corresponding to transmitted said image ID (Fig. 23, processing (6)), and transmits this image data to said operating device 100 (Fig. 23, processing (7)). Said image data received this way is printed on sheet by said image forming means 109 in the same way as in said readout from own device.

As described, even without making any rewriting of said attribute data in the transfer when said image data is filed, it becomes possible to read out said image data, by referring to said history information in said attribute information table 12c.

While no permission of access is made in this embodiment, similar process above described embodiment can be performed as well.

Moreover, it is possible to identify the simplified filing device, in which the object image data is filed, with said server at the time of taking out of said image, based on said user information set in said attribute information table 12c. Namely, first, the attribute information control means 15 of said server 10 identifies the attribute data corresponding to said device ID, by referring to said attribute information control table 12c based on said image ID received from said operating device 100, and obtains said user ID contained in the attribute data concerned. This user ID, the ID of the user who filed said object image data, makes it possible to identify the device ID of the simplified filing device in which the user is registered, namely the simplified filing device in which said image data is filed, by gaining access to said user control table 12b based on said user ID, with the user control means of said server 10.

Furthermore, to transfer said image data when said filing and said take-out of image data are carried out in said embodiment 3 to embodiment 7, transfer in said 2 forms can be made in addition to said forms of transfer in said embodiment 3 to embodiment 7, in the same way as in said embodiments 1 and 2.

Said simplified filing device can be constructed in a way to perform user authentication at own device, by comprising a user control information table for controlling the user information registered in own device. In that case, when a user is judged as not a registered user of own device in said user authentication, a user authentication is requested to said server 10.

As explained above, by having the network address of the respective simplified filing devices, in the simplified filing system according to the present invention, integrally controlled by said server 10 and having the address solution of network address integrally executed by said server, it becomes possible to sharply reduce the man-hours for the change of addresses and facilitate the address control.

Still more, by having the user information of the users registered in the respective simplified filing devices integrally controlled by said server 10 and having the user authentication integrally executed by said server, it becomes possible to sharply reduce the man-hours required for the change of user information and facilitate the user control.

Yet more, the user can obtain the object image data by simply specifying said image ID, etc., without knowing in which simplified filing device the object image data is filed.

In addition, it is possible to improve the throughput of the network, by utilizing network device such as switching hub, etc., and adopting the form of transfer according to the present invention, so as to divide the process as follows: for the frequently required process with light load, said server is used and for mutual transfer of image data by mutual transfer among devices, devices other than said server are used.

### (EMBODIMENT 8)

Next, explanation will be given on the countermeasures to be taken at occurrence of troubles such as network trouble, etc. hereafter.

When address solution of other simplified filing device is required for the filing or reading of said image data, there are cases where connection to said server 10 cannot be established because of a network trouble, etc. For that reason, it is possible to construct (the simplified filing system according to the present invention) in a way to provide an address control table for protection against trouble on the respective simplified filing devices, and prepare said address control table for protection against trouble, based on the network address corresponding to the device ID submitted to address solution by said server 10 at normal times.

However, even if said network address can be identified for said trouble, there are cases where no connection can be established with other simplified filing device. In such a case, either the processing is invalidated due to a network error or said processing is suspended until said trouble is solved, by putting the request for address solution and the request for transfer of data in the waiting row of said operating device 100. The requests which are put in the waiting row are executed after said trouble is recovered.

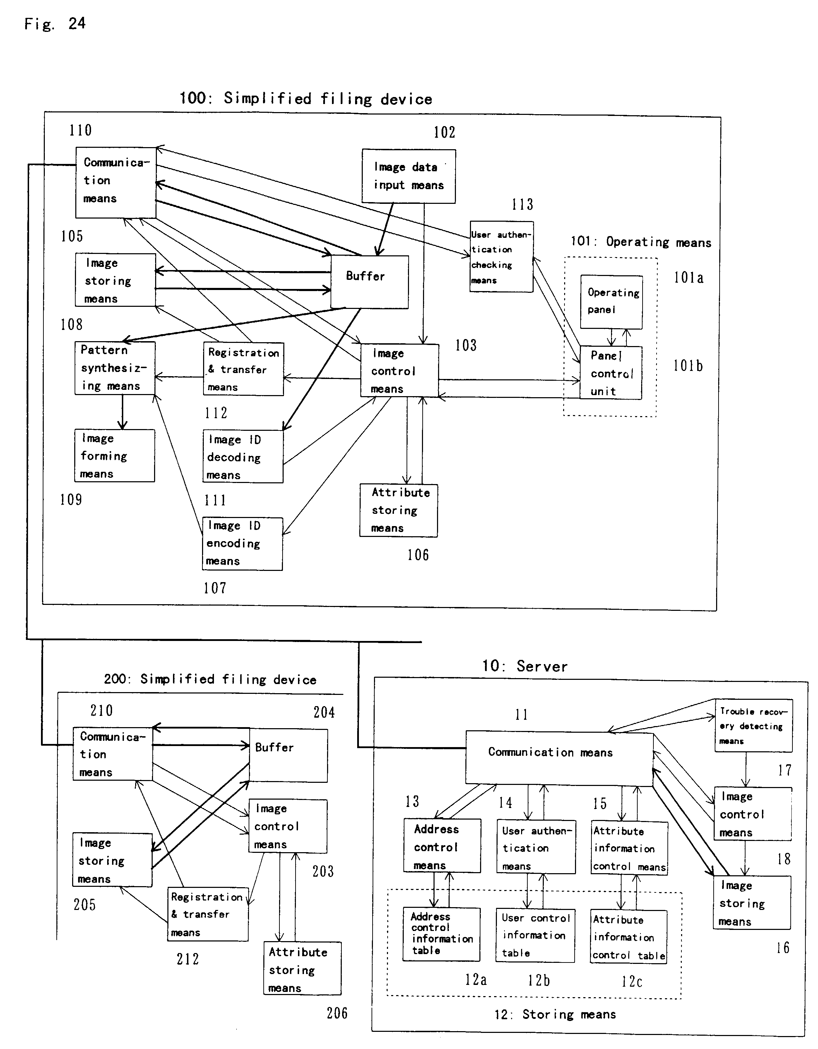

Next, in the case where the filing destination of said image data is other simplified filing device, in said respective embodiments, it is possible to temporarily store said image data in said server 10 when said image data cannot be transmitted to object said filing destination device 200 because of a failure of the filing destination device 200 or a network trouble, etc. but connection to said server 10 is possible. An example of processing in such case will be explained hereafter based on said embodiment 6 and Fig. 24.

For example, in case the data cannot be transmitted to the said filing destination device 200 in said Fig. 22, processing (5), said communication means 110 transmits said image ID and said image data to said server 10.

In said server 10, which received transfer of said image ID and said image data, the image control means 18 temporarily stores said image data in the image storing means 16 in correspondence to said image ID. Next, said attribute information control means 15 changes said history information device ID of said filing destination device 200 in embodiment 6 stored in said attribute control table 12c. Namely, said history information is changed into information to the effect that said image data and said image ID have been transferred from said filing destination device 200 to said server 10, or address of said image data, etc. on said server 10. The processing steps thereafter are the same as those in said embodiment 6.

Moreover, the trouble recovery detecting means 17 of said server 10, upon detection of recovery from said trouble, notifies said image control means 18 of the matter. The image control means 18 instructs transfer to said filing destination device 200 of said image data temporarily stored in said server 10, and this image data is transferred by the communication means 11. At that time, said attribute information control means 15 again changes said history information in said attribute control table 12c changed as described above, into device ID of said filing destination device 200. The detection of whether or not recovery from said trouble has been made in said trouble recovery detecting means 17 can be made easily by a conventionally practiced method, etc.

Even in the state where said image data stored in said server 10 as described above, the user can take out said image data as described in said embodiment 7. In that case, said attribute information control means 15 of said server 10, which received a request for address solution, can make sure that (the object image data) is stored in said server, by having access to said attribute control table 12c and referring to said history information. Explanation on the processing of take-out thereafter will be omitted, because the only difference from the processing in said embodiment 7 is that said image data is stored in said server 10 instead of said specified device 200.

Furthermore, in the form as that of said embodiment 5, when temporarily storing said image data in case of a trouble as described above, said attribute information control means 15 of said server 10 rewrites the image ID contained in transmitted said attribute data into a provisional image ID. And, after (said image data) is transmitted to object said filing destination device 200 following recovery from said trouble, (said provisional image ID) is rewritten into an image ID yet to be issued by object said filing destination device 200, and this image ID is notified to said server 10 and said communication means 110. After that, said attribute control table 12c is also rewritten, by said attribute information control means 15 of said server 10, from the provisional image ID into the notified regular image ID.

However, in the form in which the processing of identifying the simplified filing device where the object image data is stored is executed, at said server 10 at the time of take-out of said image data, based on said user information set in said attribute control table 12c as described above, it is impossible to ascertain the fact that said image data is stored in said server 10, if said image data is temporarily stored in said server 10 in case of a trouble as described above.

As described above, even in case of a network failure, etc., first, said image data can be taken out and filed in said operating device 100. In addition, in the case where connection can be established with said server 10, said image data can be temporarily stored in said server 10, and then transferred to object said filing destination device 200 after recovery from said trouble.

## Claims

1. A simplified filing system realized by connecting, through a network, a plurality of simplified filing devices for storing input image data in an image storing means by attaching image ID identifying the image data, comprising
a user authentication checking means, provided in said simplified filing device (hereinafter referred to as "operating device") operated by the user, for requesting user authentication by notifying the server connected to said network of the user information input by the user, and
a user authentication means, provided in said server which performs user authentication based on a request for user authentication from said operating device.

2. A simplified filing system as defined in Claim 1, wherein said user authentication checking means can check the user registered in the operating device concerned.

3. A simplified filing system as defined in Claim 1 or 2, wherein said operating device comprises,
an image control means for judging if the simplified filing device specified with the device ID input by the user, at the time of registration of image data, as destination of that image data is own device or other device, an address control means for identifying, in the case where the specified simplified filing device is other simplified filing device (hereinafter referred to as "filing destination device"), the network address of said filing destination device corresponding to the device ID concerned based on said device ID, and
a communication means for performing transfer of image data forming the subject of said registration based on the network address concerned and said image ID.

4. A simplified filing system as defined in Claim 1 or 2, wherein said operating device comprises,
an image control means for judging, at the time of readout of image data, if the simplified filing device specified with said image ID corresponding to the object image is own device or other device,
an address control means for identifying, in the case where the specified simplified filing device is other simplified filing device (hereinafter referred to as "specified device"), the network address of said specified device corresponding to the device ID concerned based on said device ID contained in said image ID, and
a communication means for requesting transfer of image data forming the subject of said readout based on the network address concerned and said image ID.

5. A simplified filing system realized by connecting, through a network, a plurality of simplified filing devices for storing input image data in an image storing means by attaching image ID identifying the image data, comprising
an image control means for judging if the simplified filing device specified with the device ID input by the user, at the time of registration of image data, as destination of that image data is own device or other device and requesting, in the case where the specified simplified filing device is the filing destination device, address solution based on said device ID to said server,
an address control means, provided on said server, for identifying the network address corresponding to said device ID based on the request for address solution from said operating device, and
a communication means for instructing transfer of image data forming the subject of said registration from said operating device to said filing destination device.

6. A simplified filing system as defined in Claim 5, comprising
a user authentication checking means, provided in said operating device, for requesting user authentication by notifying said server of the user information input by the user, and
a user authentication means, provided in said server 10 which performs user authentication based on a request for user authentication from said operating device.

7. A simplified filing system as defined in Claim 6, wherein said user authentication checking means can check the user registered in the operating device concerned.

8. A simplified filing system as defined in Claim 7 or 8, wherein said image control means specifies the simplified filing device of the device ID contained in said user information as filing destination of said image data.

9. A simplified filing system as defined in either one of Claims 5 to 8, wherein said filing destination device comprises an image control means for storing, in the case where said image data is transferred from said operating device to said filing destination device and stored, said image data by attaching an image ID identifying that image data and instructing transfer of the image ID concerned to said operating device.

10. A simplified filing system as defined in Claim 9, wherein said image control means of said operating device further combines, on said stored image data, an image ID mark corresponding to said image ID transferred from said filing destination device, and instructs printing of image with image ID mark.

11. A simplified filing system as defined in either one of Claims 5 to 8, wherein said image control means of said operating device attaches, prior to transfer and filing of said image data in said filing destination device, an image ID identifying said image data.

12. A simplified filing system as defined in Claim 11, wherein said image control means of said operating device instructs transfer of attribute data corresponding to said image data to said server, and that
said server comprises an attribute information control means for changing said image ID contained in said attribute data into an image ID corresponding to said filing destination device.

13. A simplified filing system as defined in Claim 11, wherein said image control means of said operating device instructs transfer of attribute data corresponding to said image data to said server, and that
said server comprises an attribute information control means for adding, to said image ID, history information showing the progress up to the time when said image data is registered in said filing destination device and controlling that information as part of the attribute data.

14. A simplified filing system as defined in Claim 11, wherein said image control means of said operating device instructs transfer of attribute data corresponding to said image data to said server, and that
said server comprises an attribute information control means for adding, to said image ID, a user ID identifying the user corresponding to said image data and controlling that user ID as part of the attribute data.

15. A simplified filing system as defined in either one of Claims 5 to 14, wherein said communication means is provided on said server side, and that said image data is transferred from said operating device to said filing destination device through the server.

16. A simplified filing system as defined in either one of Claims 5 to 14, wherein said communication means is provided on said filing destination device side, and that said image data is directly transferred from said operating device to said filing destination device.

17. A simplified filing system as defined in either one of Claims 5 to 14, wherein said communication means is provided on said operating device side for directly transferring said image data to said filing destination device.

18. A simplified filing system realized by connecting, through a network, a plurality of simplified filing devices for storing input image data in an image storing means by attaching image ID identifying the image data, comprising
an image control means for judging, at the time of readout of image data, if the simplified filing device specified with said image ID corresponding to the object image is own device or other device, and provided, in the case where the specified simplified filing device is an operating device which requests address solution to a server connected to said network based on the device ID contained in said image ID, on the operating device,
an address control means, provided on said server, for identifying the network address corresponding to said device ID based on the request for address solution from said operating device, and
a communication means for instructing transfer of image data forming the subject of said readout from said specified device to said operating device.

19. A simplified filing system as defined in Claim 18, comprising
a user authentication checking means, provided in said simplified filing device operated by the user, for requesting user authentication by notifying said server of the user information input by the user, and
a user authentication means, provided in said server which performs user authentication based on a request for user authentication from said operating device.

20. A simplified filing system as defined in Claim 19, wherein said user authentication checking means is capable of checking by itself the user registered in the operating device concerned.

21. A simplified filing system as defined in Claim 13, wherein said image control means of said operating device judges, at the time of readout of image data, if the image data concerned exists in own device or not by said image ID corresponding to the object image data and, in the case where the image data concerned exists in the specified device, requests said server for transfer of the image data concerned based on said image ID,
said attribute information control means of said server identifies the device ID of said specified device based on said image ID and said history information obtained from said operating device, and obtains a network address by notifying said address control means (of said device ID), and
said communication means instructs transfer of the image data forming the subject of said readout from said specified device to said operating device.

22. A simplified filing system as defined in Claim 13, comprising an image control means of said operating device for judging, at the time of readout of image data, if the image data concerned exists in own device or not by said image ID corresponding to the object image data and, in the case where the image data concerned exists in the specified device, requests said server for transfer of the image data concerned based on said image ID,
said attribute information control means of said server for identifying said user ID based on said image ID
a user control means, provided in said server, for identifying the device ID of said specified device and notifying said address control means (of that device ID), and
said communication means for instructing transfer of the image data forming the subject of said readout from said specified device to said operating device.

23. A simplified filing system as defined in either one of Claims 17 to 22, wherein said communication means is provided on said server side, and said object image data is directly transferred from said specified device to said operating device through the server.

24. A simplified filing system as defined in either one of Claims 17 to 22, wherein said communication means is provided on said specified device side, and said object image data is directly transferred to said operating device.

25. A simplified filing system as defined in either one of Claims 17 to 22, wherein said communication means is provided on said operating device side, and said object image data is directly transferred from said specified device to said operating device.

26. A simplified filing system as defined in Claim 13, wherein, in case said image data cannot be transmitted to said filing destination device because of occurrence of a trouble, said image control means of said operating device instructs transfer of said image data to said server and, when this image concerned is temporarily stored in said server, said attribute information control means prepares history information showing that said image data is stored in said server.

27. A simplified filing system as defined in Claim 26, wherein said server, upon detection of recovery from said trouble, instructs transfer to said filing destination device of said image data temporarily stored in said server, and said attribute information control means prepares history information showing that said image data is stored in said filing destination device.
